# EUROPÄISCHE PATENTANMELDUNG

(11) **EP 1 855 234 A1**
(43) Veröffentlichungstag der Anmeldung: **14.11.2007**
(21) Anmeldenummer: 06113900.2
(22) Anmeldetag: 12.05.2006
(51) Int. Cl.: G06Q 10/00

(54) **System und Verfahren zur Analyse und Bewertung komplexer Objekte**

(71) Anmelder: Checkvision GmbH, 65193 Wiesbaden (DE)
(72) Erfinder: Hoff, Dr. Harald, 61593 Wiesbaden (DE)
(74) Vertreter: Weber, Roland

(57) **Zusammenfassung**

Die vorliegende Erfindung betrifft ein System zur Analyse und Bewertung komplexer Objekte mit einer Eingabeeinrichtung zur Eingabe von Daten zu einem komplexen Zielobjekt in eine Zielobjektdatei, einer Eingabeeinrichtung zur Eingabe von Daten zu einem oder mehreren Vergleichsobjekten, einer Vergleichseinrichtung zum Vergleich der Daten des Zielobjektes mit den Daten einer oder mehrerer Vergleichsobjekte, einer Auswerteeinrichtung, welche die Ergebnisse der Vergleichseinrichtung bewertet und jedem Vergleichsobjekt eine Bewertung zuordnet und einer Ausgabeeinrichtung, welche die Bewertungen und ihre Zuordnung zu jedem Vergleichsobjekt ausgibt. Ebenso betrifft die Erfindung ein entsprechendes Analyse- und Bewertungsverfahren. Um ein System und ein Verfahren zu schaffen, mit welchen komplexe Objekte in nachvollziehbarer und objektivierbarer Weise bewertet werden können, um auf diese Weise die Grundlage für eine Entscheidung zugunsten eines Objektes aus einer Mehrzahl potentieller Objekte treffen zu können, wird erfindungsgemäß vorgeschlagen, daß die Zielobjektdatei Daten über Attribute der Zielobjekte und den jeweiligen Attributen zugeordnete Bewertungskriterien enthält.

## Beschreibung

Die vorliegende Erfindung bezieht sich auf ein System und ein Verfahren zur Bewertung komplexer Objekte. Komplexe Objekte sind beispielsweise Maschinen, Industrieanlagen, Gebäude, Kraftfahrzeuge bzw. Autos und andere Objekte, die nur durch eine relativ große Anzahl von Attributen einigermaßen korrekt beschreibbar sind, wobei hier unterstellt wird, daß verschiedene Objekte der gleichen Art bzw. des gleichen Typs unterschiedliche Attribute haben können. Die Komplexität derartiger Objekte ergibt sich aus der Vielzahl von Attributen, welche diese Objekte haben, und aus der vielfältig unterschiedlichen Ausprägung solcher Attribute, so daß ein Vergleich derartiger verschiedener Objekte sehr schwer fällt.

Beispielweise können Kraftfahrzeuge als komplexe Objekte im Sinne der vorliegenden Erfindung betrachtet werden. Solche Fahrzeuge (z. PKWs) gibt es mit unterschiedlich starken Motoren, als Benzin-, Diesel- oder Gasvariante, eventuell auch als Hybridmotor, mit Handschalt- oder Automatikgetriebe oder mit elektronisch betätigter Schaltung, mit vier, fünf oder sechs Gängen, unterschiedlichen Höchstgeschwindigkeiten und unterschiedlichen technischen Detailausstattungen, wie ABS und ESP, elektrisch verstellbaren Sitzen und Spiegeln, Alarmanlagen, Navigationssystemen etc, um nur einige wenige aus einer Vielzahl weiterer Attribute zu nennen.

Im allgemeinen sind Fahrzeuge verschiedener Hersteller im Hinblick auf mehrere der vorgenannten Attribute unterschiedlich. Die Motoren haben beispielsweise unterschiedliche Hubräume und/oder nicht exakt die gleichen Leistungsdaten und unterschiedliche Verbrauchswerte, die Navigationssysteme können unterschiedlich bedienerfreundlich sein etc.

Für den Käufer bzw. Anwender (sei es eine einzelne Person, ein Gremium oder eine öffentliche Institution) eines komplexen Produktes ist es deshalb sehr schwierig, den Überblick über die große Vielzahl möglicher Varianten zu behalten und eine Entscheidung zugunsten eines bestimmten Objektes zu treffen, die bei einer sorgfältigen Analyse und Überprüfung seinen eigenen Kriterien standhält. Dies gilt nicht nur für objektiv vorgegebene Kriterien und Bewertungssysteme sondern selbst dann, wenn man ganz bestimmte, spezifische Kriterien vorrangig bewertet und vergleicht, die nach dem Bewertungssystem des Anwenders "objektiv" zu einer Entscheidung für das "beste Produkt" führen sollten.

Sehr häufig führt die Komplexität der Objekte und ihre unterschiedliche Präsentation durch verschiedene Anbieter dazu, daß manche Kriterien, die für den Käufer im Prinzip wichtig wären, unberücksichtigt bleiben oder zumindest nicht mit dem Gewicht zu der Entscheidung beitragen, welches der Käufer diesem Kriterium an sich beimessen würde. Sehr häufig sind deshalb für eine Entscheidung (Kauf, Leasing oder sonstige Auftragsvergabe) eher irrationale Kriterien, wie beispielsweise das Erscheinungsbild oder persönliche Auftreten eines Verkäufers oder auch gewisse Eigenschaften des Produktes, wie beispielsweise das Image einer Marke oder gewisse ästhetische Ausstattungsdetails ausschlaggebend, obwohl der Käufer oder Anwender derartige Kriterien bei einer sorgfältigen Nachprüfung seiner Entscheidung eigentlich nicht zugrundelegen wollte.

Andererseits können aber Ausstattungsdetails, Farbe oder dergleichen auch durchaus objektive Entscheidungskriterien sein, die nach dem Wunsch eines Käufers in die Entscheidung einfließen sollen, jedoch ist es aus der Sicht des Kunden in jedem Fall vorzuziehen, wenn derartige Kriterien bewußt und in genau kalkulierter Weise in seine Entscheidung einbezogen werden.

Darüber hinaus ist es sehr leicht möglich, daß aufgrund der Komplexität entsprechender Produkte bestimmte Kriterien einfach übersehen werden, obwohl sie bei objektiver Betrachtung auch aus der Sicht des Käufers ein wesentliches Kriterium für die Kaufentscheidung sein sollten.

Die vorliegende Erfindung strebt daher an, ein System und ein Verfahren bereitzustellen, mit deren Hilfe es möglich ist, Entscheidungen für oder gegen bestimmte komplexe Objekte zu "objektivieren". Mit "objektivieren" ist dabei nicht eine von den persönlichen Kriterien der Person oder der Institution, die eine Entscheidung für ein Objekt treffen muß, unabhängiger Kriterienkatalog gemeint, sondern vielmehr sollen die individuellen Vorstellungen und Kriterien der Person oder Institution, die eine Entscheidung für ein bestimmtes komplexes Objekt treffen muß, durchaus in die Entscheidung einfließen, jedoch in einer Weise, die eine unbewußte Beeinflussung der Entscheidung weitgehend ausschließt. Darüber hinaus wäre es zweckmäßig, wenn die der Entscheidung zugrunde zu legenden Kriterien vor der detaillierten Befassung mit den konkret angebotenen Objekten erfolgen könnte.

Der vorliegenden Erfindung liegt daher die Aufgabe zugrunde, ein System und ein Verfahren zu schaffen, mit welchem komplexe Objekte in nachvollziehbarer und objektivierbarer Weise bewertet werden können, um auf diese Weise die Grundlage für eine Entscheidung zugunsten eines Objektes aus einer Mehrzahl potentieller Objekte treffen zu können. Auch wenn nur ein einzelnes Objekt zur Auswahl ansteht, kann die vorliegende Erfindung angewendet werden, da eine Entscheidung auch in dem Verzicht auf das Objekt liegen kann, wenn es beispielsweise unabdingbare Kriterien nicht erfüllt Es versteht sich, daß die Entscheidung als solche nicht Gegenstand der vorliegenden Patentanmeldung ist, sondern nach wie vor dem Anwender des erfindungsgemäßen Systems und des entsprechenden Verfahrens vorbehalten bleibt. Das System und das Verfahren liefern aber eine jederzeit nachvollziehbare Bewertung, so daß dieses System und das Verfahren insbesondere für verantwortliche Personen, die ihre Entscheidungen im Zweifelsfall vor übergeordneten Gremien verantworten müssen, eine große Hilfe und Unterstützung bietet. Insbesondere erlaubt das System eine Überprüfung der zugrunde gelegten Bewertungskriterien, bevor eine Entscheidung für oder gegen ein Objekt getroffen wird.

Zur Lösung dieser Aufgabe weist das erfindungsgemäße System die folgenden Merkmale auf:
- eine Eingabeeinrichtung zur Eingabe von Daten zu einem komplexen Zielobjekt in eine Zielobjektdatei,
- eine Eingabeeinrichtung zur Eingabe von Daten zu einem oder mehreren Vergleichsobjekten,
- eine Vergleichseinrichtung zum Vergleich der Daten des Zielobjektes mit den Daten einer oder mehrerer Vergleichsobjekte,
- einer Auswerteeinrichtung, welche die Ergebnisse der Vergleichseinrichtung bewertet und jedem Vergleichsobjekt eine Bewertung zuordnet und
- einer Ausgabeeinrichtung, welche die Bewertungen und ihre Zuordnung zu jedem Vergleichsobjekt ausgibt,
wobei die Zielobjektdatei Daten über Attribute der Zielobjekte und den jeweiligen Attributen zugeordnete Bewertungskriterien enthält.

Dabei hat das "Zielobjekt" alle diejenigen Eigenschaften bzw. Attribute, die es nach den Vorstellungen der die Entscheidung über das Objekt treffenden Person oder aber nach objektiv vorgegebenen Kriterien, einer Ausschreibung oder einer Vorschrift einer übergeordneten Institution haben sollte. Die Daten und gegebenenfalls zusätzliche Informationen, wie Erläuterungen und Kommentare zu den Daten eines Zielobjektes werden in eine Zielobjektdatei eingegeben. Der Begriff "Datei" ist im Sinne der vorliegenden Erfindung sehr allgemein zu verstehen. Er umfaßt insbesondere auch Listen und Tabellen und andere Darstellungen, die geeignet sind, Daten oder Attribute eines Zielobjektes wiederzugeben und zu speichern. Im allgemeinsten Fall handelt es sich einfach um elektronischen Speicher, gegebenenfalls auch virtuellen Speicherraum, der in geeigneter Weise organisiert ist, um die einzugebenden Daten in einfacher Weise aufnehmen und weiterverarbeiten zu können.

Des weiteren werden über eine Eingabeeinrichtung, welche dieselbe Eingabeeinrichtung sein kann, wie die diejenige, über welche die Daten des komplexen Zielobjektes eingegeben wurden, zur Eingabe von Daten (und gegebenenfalls Informationen) zu mindestens einem, vorzugsweise zu mehreren Vergleichsobjekten in eine oder mehrere entsprechende Vergleichsobjektdateien einzugeben, wobei auch die Vergleichsobjektdateien sehr abstrakt als in irgendeiner Weise organisierter Speicherraum zu verstehen sind, der vorzugsweise der Struktur und Art der Daten und Informationen sinnvoll angepaßt ist.

Eine Vergleichseinrichtung kann dann die Daten des Zielobjektes mit denen des einen oder mehrerer Vergleichsobjekte vergleichen, wobei eine in die Vergleichseinrichtung integrierte oder der Vergleichseinrichtung nachgeschaltete Auswerteeinrichtung die Ergebnisse des Vergleichs bewertet und auf diese Weise jedem Vergleichsobjekt eine Bewertung zuordnet.

Diese Bewertung wird dann über eine Ausgabeeinrichtung ausgegeben, wobei jedem Vergleichsobjekt eine eindeutige Bewertung zugeordnet wird. Auch diese Bewertung kann gegebenenfalls noch mit Kommentaren und Informationen garniert sein, die sich aus den zu den Vergleichsobjekten und dem Zielobjekt angegebenen zusätzlichen Kommentaren und Informationen speisen. Die Ausgabeeinrichtung kann ein Drucker, ein Bildschirm oder irgendein anderes elektronisches Medium sein, welches die Bewertungsdaten speichert.

Dabei umfaßt die Eingabe von Daten über ein komplexes Zielobjekt insbesondere Daten über Attribute des Zielobjektes einschließlich der den jeweiligen Attributen zugeordneten Bewertungskriterien. Beispielsweise könnten die Attribute in einem mehrstufigen System von "sehr wichtig" bis "unwichtig" eingestuft werden. Insbesondere diese jeweiligen Attributen zugeordneten Bewertungskriterien werden durch die Auswerteeinrichtung verarbeitet, um letztlich daraus eine Bewertung eines Vergleichsobjektes zu generieren.

Dabei ist weiterhin eine Variante des Systems besonders bevorzugt, bei welcher das Bewertungssystem bzw. die Bewertungssysteme für alle oder auch nur für einzelne Attribute frei wählbar und definierbar sind. Wie bereits erwähnt, liegt ein Bewertungssystem in der Kategorisierung von unwichtig bis sehr wichtig, die z. B. fünf Stufen umfassen kann. Darüber hinaus ist es möglich, den Attributen bestimmte maximale Punktzahlen zuzuordnen oder die Erfüllung oder Nichterfüllung bzw. teilweise Erfüllung bestimmter Attribute mit den Schulnoten von eins bis sechs zu klassifizieren oder aber auch durch Prozentwerte auf einer Skala von 0 bis 100%, und manche Attribute lassen sich einfach durch ein einfaches Nein/Ja-Schema bewerten, d.h. das Attribut ist entweder vorhanden oder nicht vorhanden.

In vielen Fällen kann es zweckmäßig sein, wenn Attribute nach Detailattributen in unterschiedlichen Strukturebenen gegliedert sind. Um das Beispiel eines Autos wieder aufzugreifen, könnte beispielsweise der Bereich Technik untergliedert sein in die Bereiche "Motor" und "Fahrwerk". Das Attribut "Motor" könnte wieder in die Detailattribute "Diesel", "Benzin", "Gas", "Elektro" und "Hybrid" unterteilt sein. Diese verschiedenen Motortypen könnten ihrerseits nochmals aufgegliedert werden nach der Motorleistung, angegeben in Kilowatt oder PS. Auf diese Weise erhält man Attribute und Detailattribute in mehreren Strukturebenen in zunehmend feineren Abstufungen, und in jeder Ebene kann jedes Detailattribut bewertet werden, und die Bewertungen der Detailattribute addieren sich letztlich zu der Bewertung der Attribute der jeweils höheren Ebene und können so zu einer Bewertung ganzer Bereiche oder Baugruppen verwendet werden. Aus diesen Bewertungen für größere Baugruppen oder Bereiche kann dann eine Gesamtbewertung generiert werden.

Die hierfür benötigte Tiefe der Strukturebenen, d.h. die maximale Zahl verschiedener Ebenen, kann in der bevorzugten Ausführungsform der Erfindung bei einem entsprechenden System eingestellt und vorgewählt werden. Dabei ist es zweckmäßig, wenn die Attributstruktur des Zielobjektes im wesentlichen identisch mit der Attributstruktur der Vergleichsobjekte ist, wobei es allerdings sein kann, daß bestimmte Attribute (oder auch eine ganze Attribut- bzw. Detailattributebene) bei einem Zielobjekt möglicherweise überhaupt nicht vorhanden sind, wohl aber bei dem Vergleichsobjekt oder umgekehrt. In diesen Fällen sieht die Erfindung in ihrer bevorzugten Variante vor, daß bei Hinzufügung eines Attributs (oder einer Attributebene) in einem Verbleichsobjekt, welches in den anderen Vergleichsobjekten oder auch im Zielobjekt nicht vorhanden ist, automatisch ein Platzhalter für dieses Attribut (bzw. eine leere Attributebene) auch in den anderen Vergleichsobjekten oder dem Zielobjekt erzeugt wird, um deutlich zu machen, daß zumindest eines der Vergleichsobjekte an dieser Stelle ein Attribut hat, das bei den anderen Objekten fehlt. Umgekehrt haben Vergleichsobjekte an den Positionen Leerstellen (oder leer Attributebenen), wo das Zielobjekt Attribute (bzw. Ebenen) aufweist, die aber bei dem betreffenden Vergleichsobjekt nicht vorhanden sind.

Wie bereits erwähnt, können den einzelnen Attributen frei wählbar unterschiedliche Wichtungen zugeordnet werden, beispielsweise durch die erwähnte fünfteilige Skala von wichtig bis sehr wichtig oder durch ein Punktesystem, bei welchem beispielsweise die Wichtigkeit durch die Zahl der Punkte zwischen 0 und 10 oder einfach durch einen Prozentwert ausgedrückt wird.

Zweckmäßig ist es, wenn die Attribute in Form strukturierter Tabellen angeordnet sind. Solche strukturierten Tabellen findet man beispielsweise auch in Programmen, die umfangreiche Dateien verwalten, wie z. B. in Textverarbeitungssystemen, wo ein übergeordneter Ordner neben Dateien auch untergeordnete Ordner aufweisen können, die wiederum Unterordner aufweisen können und so weiter, so daß sich hieraus die erwähnten Strukturebenen zwanglos ergeben.

Darüber hinaus ist es zweckmäßig, wenn dem Benutzer von vornherein vorgegebene Muster von Zielobjekten zur Verfügung gestellt werden. Ein solches Muster kann beispielsweise ein Zielobjekt definieren, das sämtliche auf dem Markt bekannte oder verfügbare Attribute enthält und anhand von Erfahrungswerten könnte ein solches Muster eines Zielobjektes auch schon Vorschläge für Wichtung und Bewertungskriterien enthalten, die der Benutzer anschließend nur noch zu bestätigen braucht. Der Benutzer kann dann, falls gewünscht, völlig unwichtige oder unerwünschte Attribute aus dem Muster entfernen, kann die Wichtungen ändern oder hinzufügen oder auch vorhandene Wichtungen einfach bestätigen. Dabei ist es jedoch zweckmäßig, wenn die einzelnen Attribute und Wichtungen jeweils individuell von dem Benutzer bestätigt werden, bevor sie aktiviert werden. Das System kann aber auch so gestaltet werden, daß der Benutzer einen Vorschlag für ein Zielobjekt einfach übernimmt.

Das erfindungsgemäße Verfahren arbeitet in entsprechender Weise, indem zunächst die Daten in eine Zielobjektdatei eingegeben werden, anschließend die Daten der Vergleichsobjekte eingegeben werden und dann der Vergleich und die Auswertung durchgeführt wird, wobei zusammen mit den Attributen bzw. Daten zu Attributen der Zielobjekte auch zugeordnete Bewertungskriterien eingegeben werden, um Vergleichsobjekte anhand des konkreten Vergleichs und der Bewertungskriterien einstufen zu können.

Darüber hinaus hat es sich als zweckmäßig erwiesen, wenn anstelle von Attributen oder anstelle von ganzen Attributgruppen bzw. Attributen höherer Strukturebenen Links in die entsprechenden Tabellen bzw. Dateien eingefügt werden. Diese Links können dann beispielsweise Informationen bzw. Daten zu einem Vergleichsobjekt aus anderen Datenquellen übernehmen. Um nochmals das Beispiel eines Autos aufzugreifen, so könnten beispielsweise die konkreten technischen Daten eines Vergleichsobjektes direkt vom Hersteller abgerufen werden, so daß die Datei zu einem Vergleichsobjekt auf diese Weise mehr oder weniger automatisch erzeugt wird. Auch die Zielobjektdatei könnte von einem entsprechenden Provider bereits vorgegeben sein oder mit entsprechenden konkreten Attributen gefüllt werden, wenn die ursprüngliche Zielobjektdatei entsprechende Links enthält.

Dabei ist es weiterhin zweckmäßig, wenn zu ein und demselben Vergleichsobjekt möglicherweise unterschiedliche Datenquellen verwendet werden, bei welchen, obwohl es sich um dasselbe Vergleichsobjekt handelt, möglicherweise unterschiedliche Attribute angegeben sind. Beispielsweise können sich die Informationen eines Herstellers durchaus von den Informationen einer unabhängigen Prüfstelle bzw. einer Fachzeitschrift oder dergleichen unterscheiden. In diesem Fall werden zweckmäßigerweise formal mehrere verschiedene Vergleichsobjekte bzw. Dateien zu Vergleichsobjekten erstellt, die lediglich unterschiedliche Versionen ein und desselben Vergleichsobjektes repräsentieren, die aber möglicherweise unterschiedliche Bewertungen erfahren, so daß der Anwender in einem solchen Fall noch entscheiden kann, welche Version des Vergleichsobjektes ihm vertrauenswürdiger erscheint.

Die Attribute (eines Ziel- oder Vergleichsobjektes) können in der bevorzugten Ausführungsformen unterschiedlichen Kategorien zugeordnet werden. Beispielsweise kann ein Attribut ein Steigerungsattribut (bzw. Steigerungsmerkmal) sein. Ein Steigerungsattribut ist typischerweise ein Attribut, das quantitativ meßbar ist, wobei das Attribut als solches in einer Minimal- oder Maximalangabe besteht. Ein Vergleichsobjekt kann dann einen Minimalwert deutlich überschreiten oder einen Maximalwert deutlich unterschreiten, was zu einer Übererfüllung (Steigerung) des Attributes führt. Eine andere Kategorie eines Attributs ist die des Alternativattributs. Eine Zielobjektdatei legt möglicherweise ein Attribut fest, zu dem es Alternativen gibt. Wenn dies bereits bei der Erstellung der Zielobjektdatei bekannt ist, kann das betreffende Attribut entsprechend kategorisiert werden. Anderenfalls kann diese Eigenschaft jedoch auch erst bei der Erstellung einer Vergleichsobjektdatei offenbar werden, wobei das System dann vorzugsweise die bis dahin womöglich noch nicht erfolgte Einordnung in die Kategorie "Alternativattribut" auslöst.

Es versteht sich, daß ein Vergleichsobjekt nicht notwendigerweise ein Kandidat für eine Beschaffung sein muß, sondern auch ein bereits vorhandenes oder genutztes Objekt sein kann, so daß es insbesondere möglich ist, einen Ist-Zustand mit den Anforderungskriterien, d. h. dem Zielobjekt, sowie mit anderen Vergleichsobjekten zu vergleichen. Insbesondere können dabei auch mögliche Optionen des vorhandenen Objektes, die bis dahin noch nicht genutzt oder beschafft wurden, durch Eingabe der entsprechende Attribute in eine entsprechende Vergleichsobjektdatei in die Analyse und den Vergleich einbezogen werden (Potentialanalyse). Dies kann unter Kosten/Nutzen-Gesichtspunkten dazu führen, daß anstelle einer Entscheidung für eine Neuanschaffung oder Neuinstallation die Entscheidung zugunsten des bereits vorhandenen Objektes fällt und dieses gegebenenfalls nur durch gegenüber einer Neuanschaffung preisgünstige Optionen aufgestockt wird.

Weitere Vorteile, Merkmale und Anwendungsmöglichkeiten der vorliegenden Erfindung werden deutlich anhand der Beschreibung des folgenden Ausführungsbeispiels. Es zeigen:
Figur 1 eine schematische Wiedergabe der wesentlichen Komponenten des erfindungsgemäßen Systems und
Figur 2 ein einfaches Beispiel einer Zielobjektdatei mit zugeordneten Wichtungen und/oder Bewertungskriterien.

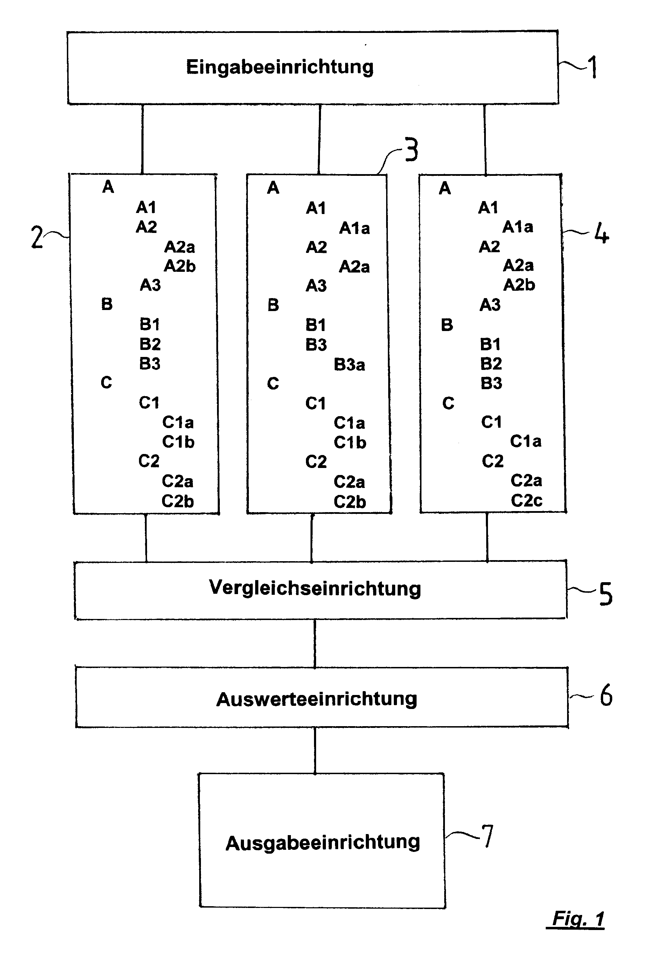

Man erkennt in Figur 1 eine Eingabeeinrichtung 1 sowie ein in Form einer strukturierten Tabelle schematisch dargestelltes Zielobjekt 2 und in analoger Weise dargestellte Vergleichsobjekte 3 und 4. Eine Vergleichseinrichtung 5 vergleicht die einzelnen Attribute des Zielobjektes 2 mit denen der Vergleichsobjekte 3 und 4, wobei in einer Auswerteeinrichtung die zwischen Zielobjekt 2 und Vergleichsobjekten 3 und 4 auftretenden Unterschiede der Attribute unter Berücksichtigung der den einzelnen Attributen zugeordneten Kriterien ausgewertet werden. Die Auswerteeinrichtung 6 ist hier nur schematisch als getrenntes Element wiedergegeben, sie kann ohne weiteres auch in die Vergleichseinrichtung 5 integriert sein. Über eine Ausgabeeinrichtung 7 werden schließlich die Ergebnisse der Auswerteeinrichtung dargestellt bzw. wiedergegeben und/oder gespeichert.

Wie man sieht, sind die das Zielobjekt charakterisierenden Attribute in drei verschiedenen Ebenen strukturiert.

Es versteht sich, daß die Darstellung des erfindungsgemäßen Systems und auch von Zielobjekten und Vergleichsobjekten hier sehr stark schematisiert und vereinfacht ist und die Komplexität dieser Objekte hier nur andeutungsweise wiedergegeben werden kann. Das Zielobjekt 2 hat in diesem Beispiel drei Attributgruppen A, B und C. Jede dieser Gruppen enthält mehrere Attribute A1, A2 , A3 bzw. B1, B2, B3 und C1, C2. Ein Teil dieser Attribute läßt sich noch weiter aufgliedern zu Detailattributen. Das Attribut A2 weist beispielsweise ein Detailattribut A2a und ein Detailattribut A2b auf. Analog sind die Attribute C1 und C2 jeweils aufgegliedert in Detailattribute C1a, C1 b bzw. C2a, C2b. Es versteht sich, daß in der Realität die Zahl der Attributgruppen, der Attribute und auch der Detailattribute im allgemeinen erheblich größer ist und daß die Gliederung noch sehr viel mehr Ebenen, beispielsweise sechs oder sieben oder auch zehn Ebenen aufweisen kann, während hier nur drei Strukturebenen wiedergegeben sind.

In dem vorliegenden Beispiel sind die Vergleichsobjekte 3 und 4 nach demselben Schema dargestellt, d.h. auch die Vergleichsobjekte 3 und 4 haben jeweils drei Attributgruppen A, B, C, die den Attributgruppen A, B, C des Zielobjektes 2 entsprechen. Allerdings ist beispielsweise bei dem Vergleichsobjekt 3 das Attribut A1 noch aufgegliedert und weist ein Detailattribut 1A auf, wohingegen das Detailattribut A2b, welches bei dem Zielobjekt vorhanden ist, in dem Vergleichsobjekt 3 fehlt. In der Attributgruppe B weist zwar das Attribut B3 noch ein Detailattribut B3a auf, es fehlt jedoch in dem Vergleichsobjekt 3 das Attribut B2 vollständig. Die Attributgruppe C des Vergleichsobjektes 3 stimmt hingegen vollständig mit der Attributgruppe C des Zielobjektes 2 überein.

Das Vergleichsobjekt 4 erfüllt in der Merkmalsgruppe A alle Attribute des Zielobjektes 2 und weist, ebenso wie auch das Vergleichsobjekt 3 zu dem Attribut A1 noch ein Detailattribut A1a auf. Dieses Detailattribut A1a kann beispielsweise effektiv eine Übererfüllung des Attributes A1 bzw. des mit dem Attribut A1 verfolgten Zweckes darstellen. Ein solches Attribut bzw. Merkmal kann man als Steigerungsattribut auswerten und es kann dazu führen, daß das Attribut A1 bei dem Vergleichsobjekt 4 (und auch bei dem Vergleichsobjekt 3) stärker ins Gewicht fällt als dies nach den Bewertungskriterien in der Zielobjektdatei 2 ursprünglich vorgesehen war. Derartige Steigerungsmerkmale können beispielsweise dazu dienen, wie im Falle des Vergleichsobjektes 3, das Fehlen des Detailattributes A2b auszugleichen, oder sie können beispielsweise die Angabe eines Kommentars zu dem Vergleichsobjekt 4 auslösen, der zum Ausdruck bringt, daß hier insgesamt eine Übererfüllung der Attributgruppe A des Zielobjektes gegeben ist, welche im Falle eines Gleichstandes zwischen den Vergleichsobjekten 3 und 4 den Ausschlag zugunsten des Vergleichsobjektes 4 auslösen würde. Dies könnte auch dann gelten, wenn beispielsweise die Attribute der Gruppe A bei dem Vergleichsobjekt 3 vollständig mit den Attributen der Gruppe A des Zielobjektes 2 übereinstimmen würde, da das Vergleichsobjekt 4 diese Übereinstimmung ebenfalls hat und darüber hinaus ein Zusatz- bzw. Steigerungsmerkmal aufweist.

Manche Attribute des Zielobjektes 2 sind bei einem der Vergleichsobjekte 3 oder 4 möglicherweise nicht identisch, sondern in Form eines Äquivalentes oder einer Alternativmerkmales vorhanden. Beispielsweise fehlt dem Vergleichsobjekt 3 das Attribut B2, das z. B. ein hydraulischer Bremskraftverteiler sein kann. Statt dessen könnte aber das Vergleichsobjekt 3 ein Attribut B4 (nicht dargestellt) aufweisen, welches einen durch Elektromotoren bewirkten Bremskraftausgleich umfaßt.

Die Auswerteeinrichtung kann über den reinen Vergleich der Attribute von Zielobjekten und Vergleichsobjekten hinaus zusätzlich eine Kostenanalyse durchführen und beispielsweise ein Kosten/Nutzen-Verhältnis berechnen. Allerdings wäre es auch möglich, die mit einem konkreten Vergleichsobjekt verknüpften Einmalkosten und laufenden Kosten auch in Form von Attributen zu berücksichtigen, beispielsweise als Aufwertungsfaktor, der sich aus dem Verhältnis des höchsten Preises aller Vergleichsobjekte zu dem konkreten Preis eines bestimmten Vergleichsobjektes ergibt. Der Preis eines Vergleichsobjektes kann beispielsweise auch mit einem normierten Faktor 2a/(a+b) in die Gesamtbewertung eingehen, wobei b der Preis für das in Rede stehende Vergleichsobjekt ist und a der niedrigste Preis eines Vergleichsobjektes für alle in Frage kommenden Vergleichsobjekte ist.

Ansonsten ist es auch möglich, Attribute in Form von bestimmten Preis- oder Kostenfenstern anzugeben, wobei sowohl einmalige als auch laufende Kosten berücksichtigt werden können. Auch komplexere Kosten/Nutzenanalysen und der durch ein konkretes Vergleichsobjekt prognostizierte Nutzen oder Mehrgewinn im Verhältnis zu den aufzuwendenden einmaligen und laufenden Kosten kann mit Hilfe eines entsprechenden Tools berechnet werden und entweder als Faktor in die Gesamtbewertung eingehen oder separat in einer Kosten/Nutzenrechnung zu jedem Vergleichsobjekt dargestellt werden.

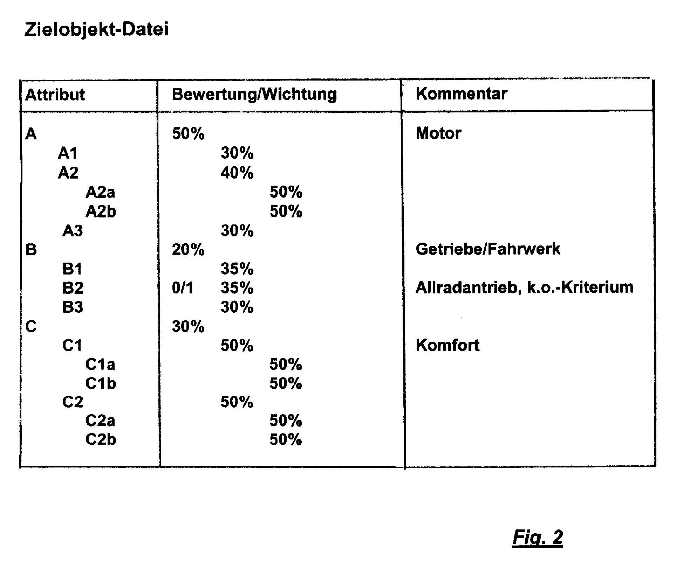

Figur 2 zeigt wiederum in einer stark vereinfachten, schematischen Darstellung ein mögliches Beispiel einer Zielobjektdatei. Als Zielobjektdatei wurde hier die bereits in Figur 1 teilweise dargestellte Zielobjektdatei 2 ausgewählt mit den drei Attributgruppen A, B und C. Jede Attributgruppe und jedem einzelnen Attribut und Detailattribut sind in diesem Fall Prozentzahlen zugeordnet, die dem prozentualen Anteil entsprechen, mit welchem die betreffenden Attribute in die Bewertung eingehen. Dabei haben die Bewertungsprozente für die Attributgruppen, die Attribute und die Detailattribute dieselbe Ebenenstruktur wie die entsprechenden Attribute selbst. Die Prozentzahlen sind also so zu verstehen, daß die Attributgruppe A mit 50% in die Gesamtbewertung eingeht, die Attributgruppe B mit 20% und die Attributgruppe C mit 30%. Innerhalb der Attributgruppe A tragen die Attribute A1 und A3 jeweils zu 30% bei und das Attribut A2 zu 40%. Die Detailattribute A2a und A2b tragen ihrerseits je 50% zu dem Attribut A2 bei. Zusätzlich oder unabhängig von den Prozentzahlen könnte jedes der Attribute oder Detailattribute auch noch mit einer Kategorisierung von "unwichtig" bis "sehr wichtig" versehen sein. Implizit wird dies allerdings auch schon durch die Verteilung der prozentualen Anteile zum Ausdruck gebracht, indem beispielsweise das Attribut A2 mit 40% in die Bewertung der Attributgruppe A eingeht, während die Attribute A1 und A3 nur jeweils mit 30% in diese Bewertung eingehen. Diese Prozentzahlen können sich selbstverständlich auch noch deutlich stärker unterscheiden, beispielsweise könnte ein relativ unwichtiges Attribut mit nur 5% in die Bewertung eingehen und ein anderes sehr wichtiges Attribut mit 80%.

Zusätzlich kann man beispielsweise sogenannte "k.o.-Kriterien" in Form von Faktoren in die Gesamtbewertung eingehen lassen. Beispielsweise könnte das Attribut B2, welches hinsichtlich seiner detaillierten Ausgestaltung im einzelnen mit einem Anteil von 35% in die Bewertung der Attributgruppe B eingeht, wobei die Bewertungsgruppe B insgesamt nur 20% zur Gesamtbewertung beiträgt, dennoch hinsichtlich der Frage, ob das Attribut B2 überhaupt vorhanden ist, ein sogenanntes k.o.-Kriterium sein. Ist also das Attribut B2 vorhanden, so wird zusätzlich der Faktor 1 in der ersten Ebene der Bewertungen eingeführt, der an der Gesamtbewertung nichts verändert. Ist jedoch das betreffende Merkmal B2 überhaupt nicht vorhanden, wird hier beispielsweise der Faktor 0 eingesetzt, so daß die Bewertung insgesamt auf 0 reduziert wird.

Bezogen auf ein Kraftfahrzeug als Beispiel eines komplexen Objektes entspricht beispielsweise einer Situation, in der ein Anwende unbedingt ein Fahrzeug mit Allradantrieb benötigt Bzw. zu haben wünscht, wobei die Details, beispielsweise, ob die Differentiale für Vorder- und Hinterachse getrennt gesperrt werden können, ob ein zusätzliches Untersetzungsgetriebe (Kriechgang) vorhanden ist etc., (hier nicht dargestellte) Detailattribute sind, die dazu führen können, daß der für das Attribut B2 vorgesehene Beitrag von 35% zu der Attributgruppe B mehr oder weniger stark ausgeschöpft wird. Wäre jedoch überhaupt kein Allradantrieb vorhanden, wird nicht nur der Beitrag des Attributes B2 von 35% auf 0 reduziert, sondern es wird nach diesem Beispiel die Gesamtbewertung entsprechend herabgesetzt. Wenn das betreffende Kriterium bzw. Attribut jedoch durch andere Attribute ganz oder teilweise ausgeglichen werden kann, ist es selbstverständlich möglich, das k.o.-Kriterium dahingehend abzuschwächen, daß anstelle des Faktors 0 ein Faktor 0,5 oder irgendein anderer Wert eingesetzt wird, der kleiner als 1 ist und dadurch der Tatsache Rechnung trägt, daß ein Fahrzeug nicht den an sich gewünschten Allradantrieb hat. Möglicherweise reichen dann als Alternativmerkmal das Vorhandensein eines Sperrdifferentials für die Antriebsachse oder eine doppelte, angetriebene Hinterachse aus, wenn es sich ansonsten um ein sehr geländegängiges Fahrzeug handelt. Alternativmerkmale können insoweit die gegenüber dem Zielobjekt fehlenden Attribute durch andere, in der Zielobjektdatei nicht explizit angegebene Alternativattribute oder durch Steigerungsattribute ausgeglichen werden.

Die Spalte "Kommentar" in Figur 2 enthält im vorliegenden Falle nicht notwendigerweise diejenigen Kommentare, die in einem realen Anwendungsfall tatsächlich an dieser Position zu finden wären, sondern sie sollen hier die vorliegende Beschreibung eines Ausführungsbeispiels verständlich machen. Für das vorliegende Ausführungsbeispiel geht die Kommentarspalte wiederum von einem Kraftfahrzeug als komplexes Objekt aus, wobei den Attributgruppen A, B und C die Baugruppen Motor, Getriebe/Fahrwerk und die Komfortausstattung des Fahrzeuges entsprechen. Spezifisch für das Merkmal B2 ist vermerkt, daß es sich hier um ein sogenanntes "k.o.-Kriterium" handeln soll, welches im vorliegenden Fall einen Allradantrieb betreffen könnte. Dieser Kommentar wird dann beispielsweise in einem Dokument angezeigt welches eine Bewertung des betreffenden Vergleichsobjektes im Verhältnis zu dem Zielobjekt wieder. Die tatsächlich an dieser Stelle zu findenden Kommentare könnten sehr viel umfassender sein und könnten beispielsweise eine Auflistung denkbarer Steigerungsmerkmale enthalten.

Anstelle der angegebenen Prozentzahlen in der Spalte Bewertung/Wichtung könnten auch Ziffern für die Klassifizierung von unwichtig bis sehr wichtig, beispielsweise in fünf Stufen, Schulnoten von 1 bis 6 und dergleichen vorgesehen werden.

Wie bereits erwähnt, könnten zusätzliche Attribute vorgesehen sein, welche die mit einem Objekt verbundenen Kosten berücksichtigen. Beispielsweise könnte eine Preisobergrenze als k.o.-Kriterium vorgesehen sein, oder es könnten Faktoren vorgesehen werden, welche abhängig vom Preis bzw. den Kosten eines Objektes zur Abwertung oder Aufwertung führen, wobei unterschieden werden kann nach einmaligen Kosten (Investitionskosten) und laufenden Kosten.

Selbstverständlich können auch von der Auswerteeinrichtung unabhängige Tools vorgesehen sein, welche einen separaten Ausdruck oder die Darstellung von Zielobjektdateien und Vergleichsobjektdateien ermöglichen, beispielsweise in Form von Lasten-/Pflichtenheften, wobei derartige Dateien auch exportiert oder importiert werden können, um sie beispielsweise für Ausschreibungen zu verwenden. Anstelle eines konkreten Attributes oder einer Attributgruppe könnte auch ein Link vorgesehen sein, durch welches auf eine weitere Datenquelle verwiesen wird, die dann das entsprechende Attribut und gegebenenfalls Detailattribute beisteuert. Für bestimmte Objekttypen, die potentiell eine große Anzahl von Käufern bzw. von Anwendern des erfindungsgemäßen Systems haben, könnten auch vorgefertigte Zielobjektdateien mit vorgegebenen Bewertungskriterien und Wichtungen bereitgestellt werden, die der Anwender gegebenenfalls unverändert übernehmen oder aber seinen persönlichen Bewertungskriterien anpassen kann. Hierzu kann zweckmäßigerweise ein Abfragetool vorgesehen werden, welches dem Anwender konkrete Fragen stellt, die er lediglich mit ja/nein oder durch Änderung oder Bestätigung bestimmter Zahlen oder Verhältnisse beantworten muß, wobei das System daraus automatisch eine entsprechende Zielobjektdatei generiert. Insbesondere für Vergleichsobjektdateien kann es sehr zweckmäßig sein, wenn diese Dateien durch Importieren externer Daten erzeugt werden, sei es über Links anstelle der Attribute oder Attributgruppen oder über eine spezielle Schnittstelle, welche aus den von einem Anbieter zur Verfügung gestellten Informationen automatisch Vergleichsobjektdateien erzeugt, und zwar vorzugsweise in der Weise, daß mögliche Optionen der Vergleichsobjekte so einbezogen werde, daß alle oder zumindest ein möglichst großer Teil der Attribute des Zielobjektes erfüllt ist.

Durch die vorliegende Erfindung wird ein System und ein Verfahren bereitgestellt, welches ein grundlegendes Werkzeug für die Nachvollziehbarkeit und Objektivierung von Entscheidungsabläufen liefert. Die Erfindung stellt außerdem ein Verfahren zur Erstellung eines Dokumentes über ein komplexes Objekt bereit, welches wahlweise eine zusammenfassende Bewertung und/oder eine detaillierte Bewertung des Objektes im Verhältnis zu einem Zielobjekt enthält. Dieses Dokument kann in gedruckter Form oder in elektronischer Form vorliegen und ist vorzugsweise mit einem elektronischen Textverarbeitungs- oder Tabellenkalkulationssystem kompatibel.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. System zur Analyse und Bewertung komplexer Objekte
mit einer Eingabeeinrichtung zur Eingabe von Daten zu einem komplexen Zielobjekt in eine Zielobjektdatei,
einer Eingabeeinrichtung zur Eingabe von Daten zu einem oder mehreren Vergleichsobjekten,
einer Vergleichseinrichtung zum Vergleich der Daten des Zielobjektes mit den Daten einer oder mehrerer Vergleichsobjekte,
einer Auswerteeinrichtung, welche die Ergebnisse der Vergleichseinrichtung bewertet und jedem Vergleichsobjekt eine Bewertung zuordnet und
einer Ausgabeeinrichtung, welche die Bewertungen und ihre Zuordnung zu jedem Vergleichsobjekt ausgibt,
wobei die Zielobjektdatei Daten über Attribute der Zielobjekte und den jeweiligen Attributen zugeordnete Bewertungskriterien enthält.

2. System nach Anspruch 1, **dadurch gekennzeichnet, daß** das Bewertungssystem über die mindestens eine Eingabeeinrichtung für alle oder für einzelne Attribute frei wählbar und definierbar ist.

3. System nach Anspruch 2, **dadurch gekennzeichnet, daß** mindestens ein Bewertungssystem aus der folgenden Gruppe wählbar ist, die besteht aus einem Punktesystem, einem (Schul)-Notensystem, einem Prozentwert-System und/oder einem Ja/Nein-Schema.

4. System nach einem der Ansprüche 1 bis 3, **dadurch gekennzeichnet, daß** Wichtungen in Form von Wichtungsfaktoren berücksichtigt werden.

5. System nach einem der Ansprüche 1 bis 4, **dadurch gekennzeichnet, daß** Attribute als steigerungsfähige Attribute oder als Alternativattribute kategorisiert werden.

6. System nach einem der Ansprüche 1 bis 5, **dadurch gekennzeichnet, daß** die Attribute nach Detailattributen in unterschiedliche Strukturebenen gegliedert sind.

7. System nach Anspruch 6, **dadurch gekennzeichnet, daß** die Zahl bzw. Tiefe der Strukturebenen frei wählbar ist.

8. System nach einem der Ansprüche 1 bis 7, **dadurch gekennzeichnet, daß** unterschiedlichen Attributen unterschiedliche Wichtungen und unterschiedliche Bewertungssysteme zugeordnet werden können.

9. System nach einem der Ansprüche 1 bis 8, **dadurch gekennzeichnet, daß** die Attribute in Form strukturierter Tabellen angeordnet sind.

10. System nach einem der Ansprüche 1 bis 9, **dadurch gekennzeichnet, daß** anstelle von Attributen oder einer Gruppe von Attributen Links für den Aufruf von Attributen und/oder Detailattributen aus anderen Datenquellen vorgesehen sind.

11. System nach einem der Ansprüche 1 bis 10, **dadurch gekennzeichnet, daß** mehrere Versionen eines Vergleichsobjektes unabhängig aufnehmbar sind.

12. System nach einem der Ansprüche 1 bis 11, **dadurch gekennzeichnet, daß** eines oder mehrere Zielobjektmuster vorgegeben sind.

13. Verfahren zur Analyse und Bewertung komplexer Objekte, bei welchem über eine Eingabeeinrichtung
Daten und wahlweise auch Informationen zu einem komplexen Zielobjekt in eine Zielobjektdatei eingegeben werden,
Daten und gegebenenfalls auch Informationen zu einem oder mehreren Vergleichsobjekten in eine entsprechende Objektdatei eingegeben werden,
die Daten des Zielobjektes mit den Daten eines oder mehrerer Vergleichsobjekte verglichen werden,
die Daten des Zielobjektes und des einen oder der mehreren Vergleichsobjekte auf der Basis des Vergleichs ausgewertet werden, wobei jedem Vergleichsobjekt eine Bewertung in Bezug auf das Zielobjekt zugeordnet wird,
wobei die Zielobjektdatei Daten über Attribute des Zielobjektes und den jeweiligen Attributen des Zielobjektes zugeordnete Bewertungskriterien enthält, wobei die Auswertung des Vergleichs zwischen Zielobjekt und Vergleichsobjekt eine Bewertung der einzelnen Attribute umfaßt, und wobei das Ergebnis der Auswertung für eines oder mehrere Vergleichsobjekte ausgegeben wird.

14. Verfahren nach Anspruch 13, **dadurch gekennzeichnet, daß** die Attribute nach Detailattributen in unterschiedliche Strukturebenen gegliedert werden.

15. Verfahren nach Anspruch 14, **dadurch gekennzeichnet, daß** den Attributen frei wählbar unterschiedliche Wichtungen zugeordnet werden.

16. Verfahren nach einem der Ansprüche 13 bis 15, **dadurch gekennzeichnet, daß** Attribute in Form von Links aus externen Datenquellen aufgerufen werden.

17. Verfahren nach einem der Ansprüche 13 bis 16, **dadurch gekennzeichnet, daß** Wichtungen in Form von Faktoren berücksichtigt werden.

18. Verfahren nach einem der Ansprüche 13 bis 17, **dadurch gekennzeichnet, daß** vorgegebene Muster von Zielobjekten verwendet und wahlweise modifiziert werden.

19. Verfahren nach einem der Ansprüche 13 bis 18, **dadurch gekennzeichnet, daß** eine vorgegebene Attributstruktur verwendet und/oder modifiziert wird.

20. Verfahren nach einem der Ansprüche 13 bis 19, **dadurch gekennzeichnet, daß** durch die Ausgabeeinrichtung ein Dokument zu mindestens einem komplexen Objekt erstellt wird, wobei das Objekt eines der Vergleichsobjekte ist und das Dokument eine Bewertung des Objektes im Verhältnis auf das Zielobjekt enthält.

21. Verfahren nach Anspruch 20, **dadurch gekennzeichnet, daß** das Dokument ein elektronisch speicherbares Dokument ist und ein Format hat, welches mit einem Textverarbeitungs- oder Tabellenkalkulationssystem kompatibel ist.
